# EUROPEAN PATENT APPLICATION

(11) **EP 4 804 481 A1**
(43) Date of publication of application: **09.09.2026**
(21) Application number: 25300012.9
(22) Date of filing: 05.03.2025
(51) Int. Cl.: H04L 45/48, H04L 45/74

(54) **DATA PROCESSING NETWORK WITH CONFIGURABLE LOCAL CACHE DOMAIN**

(71) Applicant: ARM Limited, Cambridge CB1 9NJ (GB)
(72) Inventor: KASERIDIS, Dimitrios, Cambridge, CB1 9NJ (GB); PATEL, Mukesh, Cambridge, CB1 9NJ (GB); ZHANG, Wenxuan, Cambridge, CB1 9NJ (GB); JALAL, Jamshed, Cambridge, CB1 9NJ (GB); WERKHEISER, Mark David, Cambridge, CB1 9NJ (GB); YALAMARTHY, Devi Sravanthi, Cambridge, CB1 9NJ (GB); TUMMALA, Ashok Kumar, Cambridge, CB1 9NJ (GB); PATEL, Rajesh B, Cambridge, CB1 9NJ (GB); KONA, Anitha, Cambridge, CB1 9NJ (GB)
(74) Representative: Dehns

(57) **Abstract**

A data processing network includes request nodes (RNs), home nodes (HNs) and local cache nodes (LCNs) coupled by an interconnect. The interconnect includes configuration logic programmable to define one or more local cache domains (LCDs). An LCD identifies a sub-network of the data processing network and associates a set of addresses with LCNs in the sub-network. For an RN in an LCD, the interconnect routes a data transfer request associated with an address in the set of addresses from the first RN to the LCN in the LCD associated with the address. For an address not in the set of addresses, the interconnect routes a data transfer request associated with the address to the HN associated with the address. LCDs may be configured at boot time.

## Description

### BACKGROUND

The complexity of data processing networks, such as mesh networks, is increasing in terms of the number of network nodes and the number of networks links. This increase is driven, at least in part, to support large computational and memory requirements. A network may use a system level cache (SLC) to reduce data access latency. In some current systems, the system level cache is distributed across a large set of home nodes in the network to share the cache capacity over all request nodes across multiple chips. The resulting networks, with large mesh dimensions, can exhibit large latencies for the data requests and associated snoop messages.

In highly shareable workloads, the same data may be accessed by multiple requestors. Current network designs assume a system cache hierarchy that can the store and share the data. However, such designs exert a lot of pressure on the transport layer of the network to be able to move the data to the multiple destinations in the same time period.

### BRIEF DESCRIPTION OF THE DRAWINGS

The accompanying drawings provide visual representations which will be used to describe various representative embodiments more fully and can be used by those skilled in the art to better understand the representative embodiments disclosed and their inherent advantages. In these drawings, like reference numerals identify corresponding or analogous elements.
**FIG. 1** is an abstracted view of a multi-chip data processing network, in accordance with various representative embodiments.
**FIG. 2** is a diagrammatic representation of an interconnect of a data processing network, in accordance with various representative embodiments.
**FIG. 3** is a diagrammatic representation of a populated cross-point of a data processing network, in accordance with various representative embodiments.
**FIG. 4** is a diagrammatic representation of a further populated cross-point of a data processing network, in accordance with various representative embodiments.
**FIG. 5** is a diagrammatic representation of an example matrix multiplication operation.
**FIG. 6** is a diagrammatic representation of a data processing network, in accordance with various representative embodiments.
**FIG. 7** is an abstracted view of a data processing network, in accordance with various representative embodiments.
**FIG. 8** is a further abstracted view of a data processing network, in accordance with various representative embodiments.
**FIG. 9** is a diagrammatic representation of a portion of a data processing network, in accordance with various representative embodiments.
**FIG. 10** is a diagrammatic representation of configuration logic of a data processing network, in accordance with various representative embodiments.
**FIG 11** is a diagram showing a cross-point and request node of a data processing network, in accordance with various representative embodiments.
**FIG 12** is a diagram showing a cross-point and home node of a data processing network, in accordance with various representative embodiments.
**FIG. 13** is a flow chart of a method of data transfer in data processing network, in accordance with various representative embodiments.
**FIG. 14** is a sequence diagram for an example read operation, in accordance with various representative embodiments.
**FIG. 15** is a sequence diagram for a write operation, in accordance with various representative embodiments.

### DETAILED DESCRIPTION

Various embodiments of the disclosure relate to a data processing network with one or more configurable local cache domains (LCDs). The data processing network may be a system-on-a-chip (SoC), for example, or a system distributed across a plurality of connected chips.

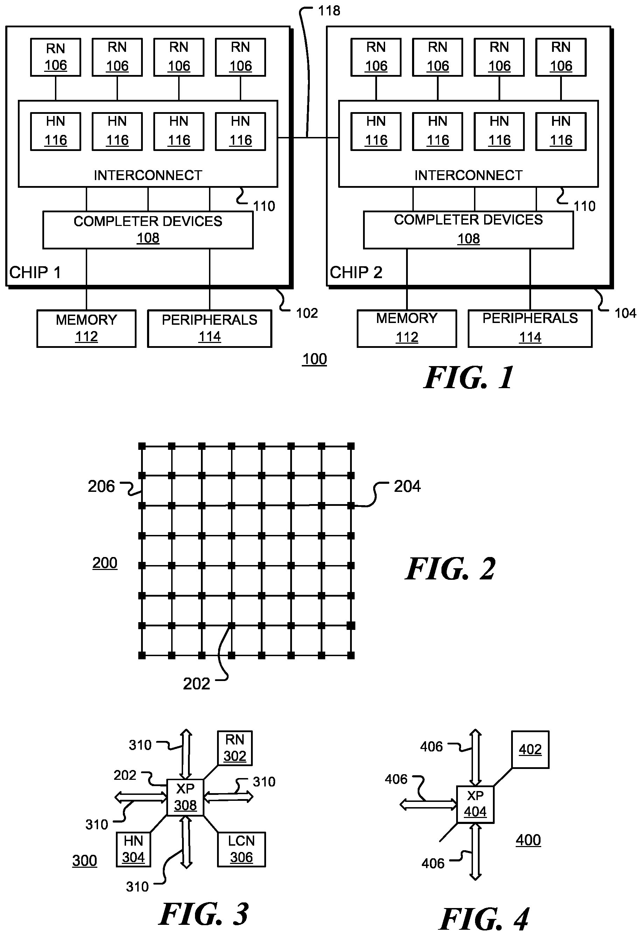

**FIG. 1** is an abstracted view of a multi-chip data processing network 100, in accordance with various representative embodiments. In the embodiment shown, data processing network 100 includes first chip or chiplet 102 and second chip or chiplet 104. A data processing network may include a single chip or multiple chips. Data processing network 100 includes multiple request nodes (RNs) 106 that access and process data. A request node (RN) can be Fully Coherent, input/output (I/O) Coherent, or I/O Coherent with Distributed Virtual Memory (DVM) support, for example. A Fully Coherent Request Node (RNF) contains coherent caches and will accept and respond to snoop messages. An I/O-Coherent Request Node (RNI) does not have a coherent cache, and cannot accept snoop messages. An I/O-Coherent Request Node with DVM support (RNI/D) has the same functionality as an RNI and can also accept DVM messages. A request node may be, for example, a central processing unit (CPU) core, a neural engine or other accelerator, or a Component Aggregation Layer that houses two or more CPU cores to be connected to one network port.

RNs 106 are coupled to each other and to completer devices 108 via an interconnect circuits 110 to form a network. A completer device 108 may be a memory controller, for example, which provides access to memory 112, or an interface to a peripheral device 114. A completer device may be a subordinate node of the network. A network may include a system level cache (SLC) to reduce the number of accesses to memory 112 and reduce the latency of data accesses. A system level cache may be distributed across a large set of home nodes 116 in a network to share the cache capacity over all network nodes and across multiple chips. In this approach, a cache line of data is uniquely mapped to a home node and all request nodes in the system access the same home node for accessing the data. A home node (HN) provides a point of coherency and serialization for a subset of system addresses and provides a cache for storing data associated with the addresses. Coherency maintenance may utilize a snoop filter (SF) that tracks the location and coherency state of data copied to caches in the network.

Chips 102 and 104 are coupled via chip-to-chip link 118.

**FIG. 2** is a diagrammatic representation of an interconnect 200 of a data processing network, in accordance with various representative embodiments. In the embodiment shown, the network is a mesh network. Interconnect 200 provides a number of cross-points (XPs) such as internal cross-point 202 and peripheral cross-point 204. Each cross-point provides one or more ports for coupling to nodes such as request nodes, home nodes and subordinate nodes. Data and messages are moved through a mesh network in a number of "hops" along transport links 206 between cross-points. While example interconnect 200 provides 64 cross-points, an interconnect may provide any number of cross-points. As the number of cross-points in a mesh network increases to support large computational and memory requirements, the probability of needing a large number of "hops" increases and the network becomes less efficient with higher latency for data requests and snoop messages.

While **FIG. 2** shows an interconnect of a mesh network, the present disclosure may be embodied in networks having other topologies, such as ring networks, bus networks, star networks, tree networks, etc., and combinations thereof.

**FIG. 3** is a diagrammatic representation of a populated cross-point 300 of a data processing network, in accordance with various representative embodiments. Populated cross-point 300 includes one or more RNs 302, HN 304 and local cache node (LCN) 306, all coupled to cross-point (XP) 308. Transport links 310 couple to neighboring cross-points. In one embodiment, transport links 310 include dedicated channels for requests, responses, write data and read data. In one embodiment, home node 304 and local cache node 306 are combined as a super home node. HN 304 provides a global home for some system addresses, while LCN 306 provides a secondary local home for some system addresses.

**FIG. 4** is a diagrammatic representation of a further populated cross-point 400 of a data processing network, in accordance with various representative embodiments. Populated cross-point 400 includes subordinate or completer node 402 coupled to cross-point (XP) 404. Transport links 406 couple to neighboring cross-points. Subordinate node (SN) 402 may be a memory controller, for example.

With a large mesh network with a large number of request nodes (such as neural engines), the distance that data needs to move from a given static home node to all the request nodes that need that data can be significant. In addition, for every hop that the data makes on the mesh they consume a slot of data transfer. Therefore, the higher number of transfers and the greater distance the data has to transfer, the higher overall mesh transport layer bandwidth and power are consumed for moving the same portion of useful data.

In highly shareable workloads, the same data is accessed by multiple requestors. Prior designs assume a system cache hierarchy that can store and share the data. Such designs though put a lot of pressure on the transport layer to be able to move the same data to the multiple destinations in the same time period. Highly shareable workloads, which need to transfer the same data to multiple destinations, create a significant overhead for data processing architectures that feature a distributed system-level cache over multiple chips in a uniform memory access (UMA) architecture. Examples of such workloads are the matrix multiplications operations used in artificial intelligence (AI) workloads. In such workloads, the same sets of weight values and/or activation values are used, in the same short time-window, by processing cores at multiple destinations to perform AI operations including training, inferences and reductions.

In one embodiment, the destinations of the data are mapped to a two-dimensional array of Neural Engines (NE) in a chip. This benefits from a very high bandwidth transport layer that is able to service all these requests at the necessary rate to keep up with the NEs bandwidth requirements. The bandwidth may be in tens of Terabytes per second, for example.

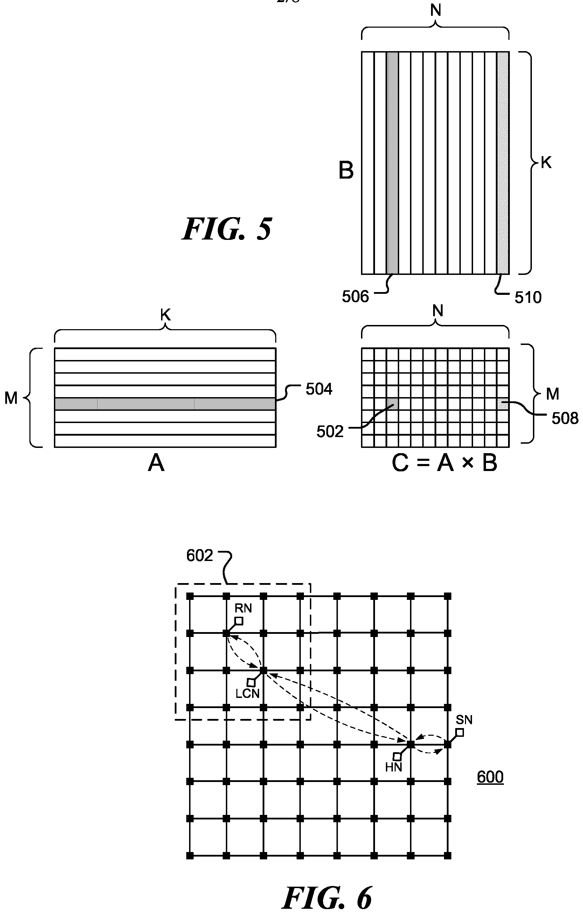

**FIG. 5** is a diagrammatic representation of an example matrix multiplication operation of matrix A (with M rows and K columns) by matrix B (with K rows and N columns) to produce output matrix C=A×B, having M rows and N columns. Different output elements in output matrix C may be computed in parallel by different processing cores or accelerators. For example, output element 502 in row r and column c of output matrix C may be determined by computing a dot product of the data in row r (504) of matrix A with the data in column c (506) of matrix B by a first processor. Similarly, output element 508 in row *r* and last column of output matrix C may be determined, in parallel, by computing a dot product of the data in row r (504) of matrix A with the data in the last column (510) of matrix B by another processor. Thus, both processors must access the data in row 502 of matrix A within a very short time period. Indeed, the data in row 502 are used by all processors computing output elements in row r of output matrix C (the row containing elements 502 and 508).

The present disclosure enables, for example, data in row 502 to be stored in the network close to the processors computing output elements in row r of output matrix C.

Without a data processing micro-architecture that takes advantage of the temporal and spatial locality of the data, the bandwidth requirements of such workloads are impractically high and force designers to seek solutions that require significantly increased on-chip area and power for the overall data processing system (which may be a System-On-Chip (SoC) for example). This area and power could be better used by adding more processing cores, such as NEs, to increase the overall data processing throughput. Finally, since the level of sharing of data and access patterns are highly dependent on the particular workload being executed, it is important for a solution to be configurable, at least at boot time, to allow for the design to be adapted to the expected workload behaviors.

An embodiment of the present disclosure provides a mechanism for organizing a configurable multi-level cache hierarchy in a data processing network that is optimized for shareable workloads, with the target of maximizing the overall mesh throughput and minimizing data request latencies. This enables the number of matrix multiplication operations per second to be maximized, for example. A configurable multi-level cache hierarchy utilizes Local Cache Domains (LCDs) to bring shared data only once from the memory and store it in a cache close to the processing elements that are using the data. The cache may be distributed across a number of local cache nodes (LCNs), for example.

**FIG. 6** is a diagrammatic representation of a data processing network 600, in accordance with various representative embodiments. Network 600 includes a sub-network 602, indicated by the broken lines, that functions as a local cache domain (LCD) for a set of addresses.

In operation, when executing a workload, request node RN processes data retrieved from subordinate node SN, which may be a memory controller, for example. In prior networks, data from subordinate node SN would be accessed via home node HN, which acts as a point of coherency and serialization for the data address. In the simple example shown in **FIG. 6****,** home node HN is 8 hops away from request node RN. As discussed above, other request nodes may process the same data in parallel. In accordance with an embodiment of the disclosure, network 600 is configured to include sub-network 602 that includes request nodes that process the same data in parallel. Local cache node LCN within the sub-network is configured to provide a local home for data associated with the addresses. Request nodes in sub-network 602 can access the data from local cache node LCN in an average of two hops and a maximum of four hops. A local cache domain (LCD) is configured by associating a set of addresses in a memory of the data processing network with one or more local cache nodes in a sub-network of the data processing network. The sub-network is configured by designating a set of one or more request nodes or a set of cross-points. The LCN provides a secondary home, since addresses in the set of addresses are also accessible via home nodes of the data processing network, which may be outside of the sub-network.

Based on a first address in the set of addresses of the local cache domain, a local cache node in the sub-network is identified, and a data transfer request associated with the first address is routed from the RN to the local cache node associated with the data address. However, for a request node not in the sub-network, or for a second address not in the set of addresses, a data transfer request associated with the second address is routed from the second RN to the HN of the data processing network associated with the second address. For example, while a first read request may have to access data via the LCN, HN or the SN, subsequent requests, from request nodes working in parallel, can retrieve the data from the LCN.

More generally, a data processing network is partitioned into N local cache domains (LCD) that act as local cache hierarchies of data that is accessed by M grouped request nodes. A RN in one LCD, will first perform an access/lookup to an LCN in the same LCD for the data. If they do not find the data, the LCD will send a request to the associated HN.

The same idea can be generalized to a network that is implemented across multiple chips that are connected together over chip-to-chip links. Thus, for example, the home and the subordinate node may be located on different chips to the request node and the local cache node. In this case, messages are passed between a chip-to-chip link, as shown in **FIG. 1****,** for example.

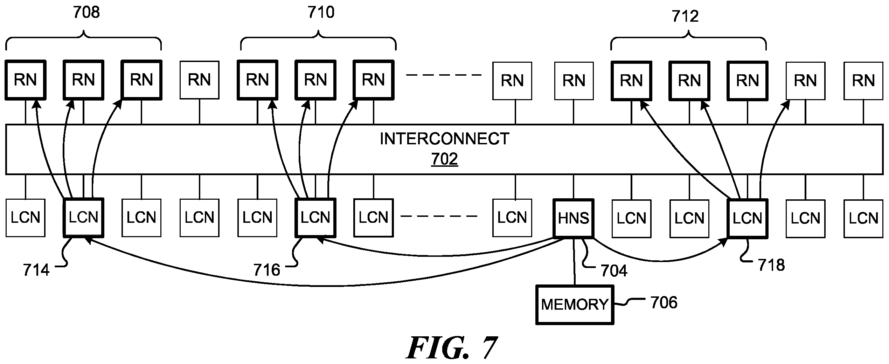

In one embodiment, the use of local cache domains enables efficient mapping of matrix multiplication operations at neural engines by moving data to the LCNs that are physically closer to the RNs (a neural engine (NE) in this example) that need the data. This avoids transferring multiple copies of data to each NE from the HN and/or memory. An example mapping is shown in **FIG. 7****,** illustrating that the number of times data are transferred from the HN and the memory to each NE is minimized.

**FIG. 7** is an abstracted view of a data processing network 700, in accordance with various representative embodiments. Data processing network 700 includes a number of request nodes RN coupled via interconnect 702 to home node 704. Home node 704 is a point of coherency for a set of data addresses in memory 706 and serves as part of a system level cache. Data processing network 700 is configured to include a first sub-network containing request nodes 708, a second sub-network containing request nodes 710, and a third sub-network containing request nodes 712. Each sub-network is associated with a set of data addresses to form a local cache domain. The network may be configured at boot time, for example. The configuration may be selected based, at least in part, on the workload to be executed. For example, when executing the workload, request nodes 708 may access the same data in parallel. When a request node 708 in the first sub-network accesses data associated with the local cache domain, requests are sent to local cache node (LCN) 714. request nodes 708 are closer (in terms of network hops) to LCN 714 than to home node 704. If the requested data is not already cached at local caching node 714, the data is retrieved from home node 704 or from memory 706 via home node 704, and may be cached at LCN 714 ready for requests from other request nodes 708. Similarly, request nodes 710 request data from LCN 716 and request nodes 712 request data from LCN 718.

A benefit of the LCD approach is that it provides local sharing of data, either from the same chip or from remote chips, and removes the need to travel multiple times to physically distant home nodes HN (on the same chip or a different chip) for the highly sharable data. In one embodiment, hierarchical sharing of data between LCDs is provided, either through home nodes or with direct LCD-to-LCD data transfers. Data is dynamically replicated across only the LCDs that requested the data.

A further benefit of the LCD approach is that the size and location of the LCDs are configurable to match the data sharing patterns of the workload.

A further benefit of the LCD approach is that it enables hierarchical tracking of coherency in the Snoop Filters (SF). This removes the pressure of tracking all request nodes in the system across multiple chips. The SF of the home node, for example, may track local cache domains or local cache nodes rather than individual RNs.

A still further benefit of the LCD approach is that an LCN and a HN can be overlapped in the same physical node, referred to a super home node (HNS).

While the particular embodiments described herein relate to a single level of LCD, a fifth benefit of the LCD approach is that it can be scaled in multiple levels of LCDs between request nodes and homes nodes.

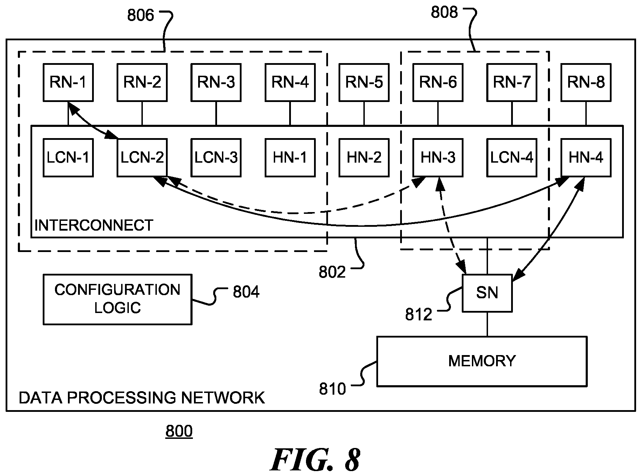

**FIG. 8** is an abstracted view of a data processing network 800, in accordance with various representative embodiments. **FIG. 8** illustrates an access pattern for a read operation that misses in both levels of a two-level hierarchy and reads the data from the memory. Data processing network 800 includes request nodes RN-1 to RN-8, local cache nodes LCN-1 to LCN-4 and home nodes HN-1 to HN-4. A node may function as both an LCN and an HN. The nodes are coupled by interconnect 802. In general, a data processing network includes a plurality of request nodes (RNs), one or more home nodes (HNs), one or more local cache nodes (LCNs), and an interconnect that couples the RNs, the one or more HNs and the one or more LCNs. Data processing network 800 includes configuration logic 804 that is programmable to define one or more local cache domains (LCDs). In one embodiment, a set of domain configurations is defined during fabrication and a member of the set is chosen at boot time or during operation. In another embodiment, the configurations themselves are programmable - via registers for example. Configuration logic enables the system address maps at the cross-points to be set. The example shown in **FIG. 8** includes LCD 806 and LCD 808. Each LCD associates a set of addresses in a memory, such as memory 810, with one or more LCNs in a sub-network of the data processing network and identifies a set of one or more RNs in the sub-network. For example, LCD 806 includes LCN-1, LCN-2 and LCN-3 together with RN-1, RN-2, RN-3 and RN-4. LCD 808 includes LCN-4 together with RN-6, RN-7, RN-8. The set of addresses of an LCD may be accessible via HNs that are inside or outside of the sub-network. For a first RN in the set of one or more RNs, RN-1 say, and a first address in the set of addresses, the interconnect is configured to determine, based on the first address, which LCN is associated with the first address, and to send a data transfer request associated with the first address from the first RN to the LCN. In contrast, for a second RN and a second address, when the second RN is not in the set of RNs (such as RN-6) or the second address not in the set of addresses, the interconnect is configured to determine, based on the second address, an HN of the data processing network associated with the second address and send a data transfer request associated with the second address from the second RN to the HN associated with the second address. In **FIG. 8****,** for a first address mapped to LCN-2, request node RN-1 requests data from LCN-2. If the first address does not hit in the snoop filter of LCN-2, LCN-2 requests the data from HN-3. If the first address does not hit in the snoop filter of HN-3, HN-3 requests the data from memory 810 via memory controller 812. When the first address hits in the snoop filter of HN-3, the data is retrieved from a cache in accordance with a presence vector of the snoop filter. The data is transferred to LCN-2 and may be stored in a cache of LCN-2. Subsequently, when any of request nodes RN-2 to RN-4 requests the same data, they also request data from LCN-2, and the data is available (either from the cache of LCN-2 or from a cache of an RN in the local cache domain) without having to retrieve from HN-3 or memory. If any of request nodes RN-5 to RN-8 request data associated with the first address, the request is sent directly to HN-3. For a second address in the LCD, when the requested data is not stored in a cache of LCN-2, LCN-2 requests the data from HN-4, which is associated with the second address. For a third data address, not in the LCD, RN-2 requests the data from home node associated with the third address.

As described above, an LCN and an HN may be combined in a super home node (HNS).

An LCN in an LCD may include a snoop filter that tracks coherency for the set of one or more RNs in the LCD. An HN outside of the sub-network may include a snoop filter that tracks coherency for the one or more LCDs.

In one embodiment the data processing network is implemented in a single integrated circuit chip. In a further embodiment, The data processing network spans multiple integrated circuit chips.

The LCDs may be configured as a hierarchy of LCDs.

The use of LCDs enables workloads with shared data, such as matrix multiplication operations, to be mapped to request nodes, such as Neural Engines (Nes) that are closer to the data. The data are stored in an LCD cache, which is distributed across the one or more LCNs in the LCD, and are physically closer to the NEs that need the data. This avoids transferring copies of the data to each NE from associated HN and/or memory.

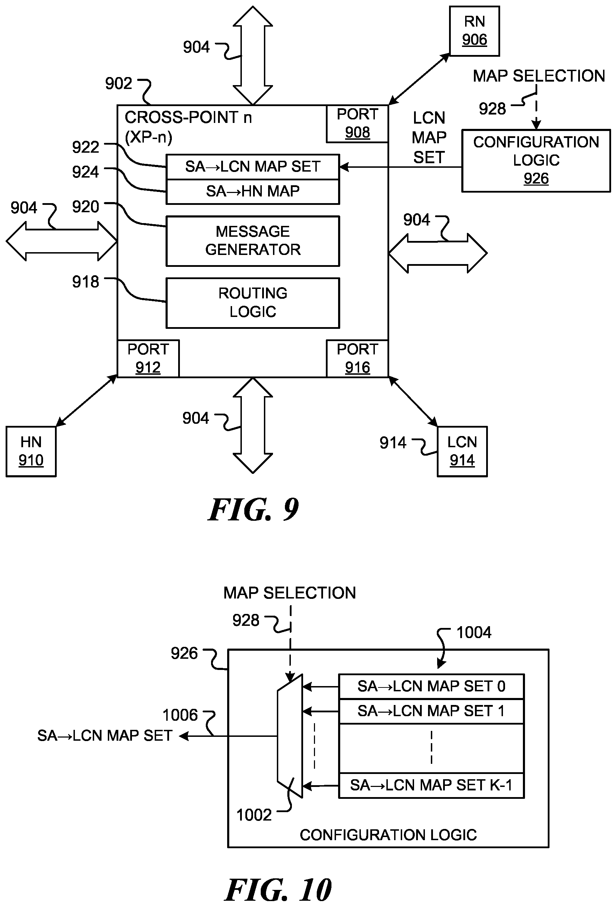

**FIG. 9** is a diagrammatic representation of a portion of a data processing network, in accordance with various representative embodiments. **FIG. 9** shows cross-point 902 between links 904 of a network interconnect. The example shown relates to an interior point of a mesh network, but the disclosed mechanisms may be applied to other network connection points. Request node (RN) 906 is coupled to port 908 of cross-point 902. Home node (HN) 910 is coupled to port 912 of cross-point 902. Local cache node (LCN) 914 is coupled to port 916 of cross-point 902. Cross-point 902 includes routing logic 918 that sends and receives messages on links with other cross-points of the network. The messages may be generated by message generator 920. For example, when a read request for a first system address (SA) is received from RN 906, the first system address is mapped to a corresponding network node and a message directed to that node is generated.

In accordance with an embodiment of the present disclosure, when the first system address is in the local cache domain of the RN, the address is mapped to the identifier of a local cache node (LCN) in the map of SA-to-LCN map set 922 of the domain. SA-to-LCN map set 922 includes maps for each of the one or more local cache domains. Otherwise, the address is mapped to the identifier of the associated home node (HN) in SA-to-HN map 924.

Similarly, requests from LCN 914 may be routed to an associated home node using SA-to-HN map 924.

Still further, snoop requests from HN may be routed using SA-to-LCN map set 922.

The maps are configured, at boot time for example, by configuration logic 926. In one embodiment, the local cache domains are configured to improve efficiency for one or more workloads. However, the local cache domains may be configured based on other criteria. Map selection signal 928, such as a workload identifier or other configuration identifier, is used to select between different local cache domain configurations, as shown in **FIG. 10****,** for example.

**FIG. 10** is a diagrammatic representation of configuration logic 926 of a data processing network, in accordance with various representative embodiments. Map selection signal 928, such as a workload identifier or other configuration identifier, for example, controls multiplexer or switch 1002 to select between map sets 1004. Each map set contains maps for one or more local cache domains. Each map in a map set maps system addresses (SAs) to associated local cache nodes (LCNs). Configuration logic 926 outputs the selected map set 1006 to be sent to the interconnect. For example, the selected map set may be stored at cross-points of the interconnect. A fixed SA-to-HN map may also be stored at cross-points. In this way, the network is configured such that shared data is cached closer to the request nodes, such as processor cores or neural engines, which use the data.

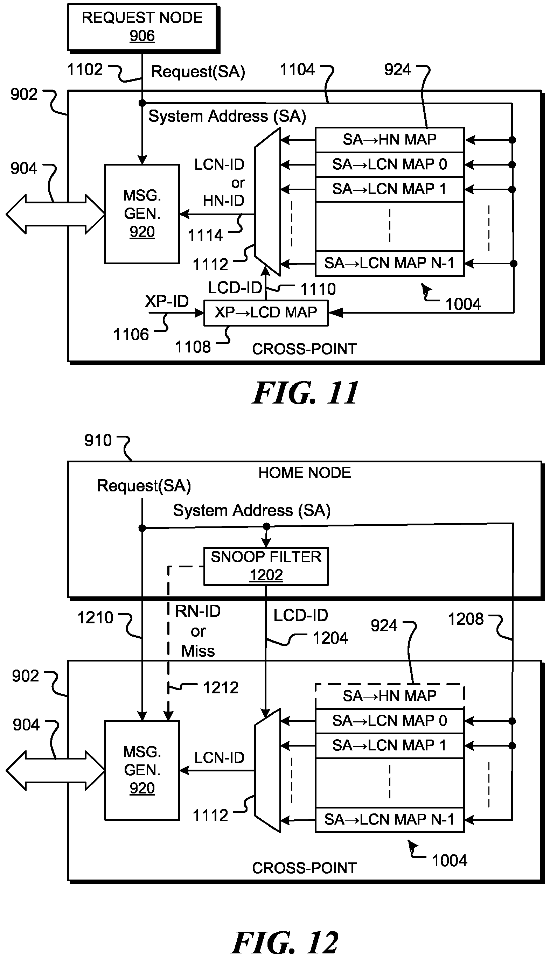

**FIG 11** is a diagrammatic representation showing a cross-point 902 and request node 906 of a data processing network, in accordance with various representative embodiments. In operation, request node 906 sends data transfer request 1102 to cross-point 902. The data transfer request specifies a system address (SA) 1104. The SA is applied to maps in map set 1004 and to map 924. Dependent upon an identifier 1106 of the cross-point (or the request node) and system address 1104, map logic 1108 determines if the request is within the local cache domain (LCD) and generates selection signal 1110. A designated value may be used to indicate that the request is not in the LCD. Selection signal 1110 controls multiplexer or switch 1112 to select map output 1114. This is an LCN identifier if the address is in the LCD, or an HN identifier if the address is not in the LCD. The identifier is passed to message generator 920 that generates a network message on link 904. In this way, requests from RN 906 are routed to an LCN or an HN. It is noted that only one of the SA-to-LCN maps is used to route the RN. The other maps may be used when an HN is coupled to the same cross-point, but may be omitted when no HN is coupled to the cross-point.

**FIG. 12** is a diagrammatic representation showing a cross-point 902 and home node (HN) 910 of a data processing network, in accordance with various representative embodiments. In operation, home node 910 receives requests for data from both RNs and LCNs. Home node 910 acts as a point of coherence for the data and maintains snoop filter 1202 to record the presence of the data in various caches of the data processing system. These may be caches at RNs in the same local cache domain or caches in other local cache domains. In accordance with an embodiment, snoop filter 1202 includes a presence vector that indicates if data is cached in a particular local cache domain but does not indicate where (e.g., at which RN) in the domain it is stored. The length of the presence vector can therefore be much smaller than a presence vector with a bit for every snoopable cache in the network.

In operation, when snoop filter 1202 indicates presence of requested data at a particular LCD, an identifier 1204 of the domain is used to control multiplexer 1112 to select the output of the corresponding SA-to-LCN map. The input to the map is provided by system address (SA) 1208 associated with the request to the HN.

Snoop request 1210 for the SA and the target node ID 1206 are passed to message generator 920 to generate a snoop message that is sent on link 904. The snoop message may be a request for data (in the case of a read request), or a request for a coherency action (such as a change of coherency state).

Snoop filter 1202 may indicate, by signal 1212, presence of the data at a specific RN, in which case a message is sent the RN. Snoop filter 1202 may indicate a miss, in which case the memory may be accessed.

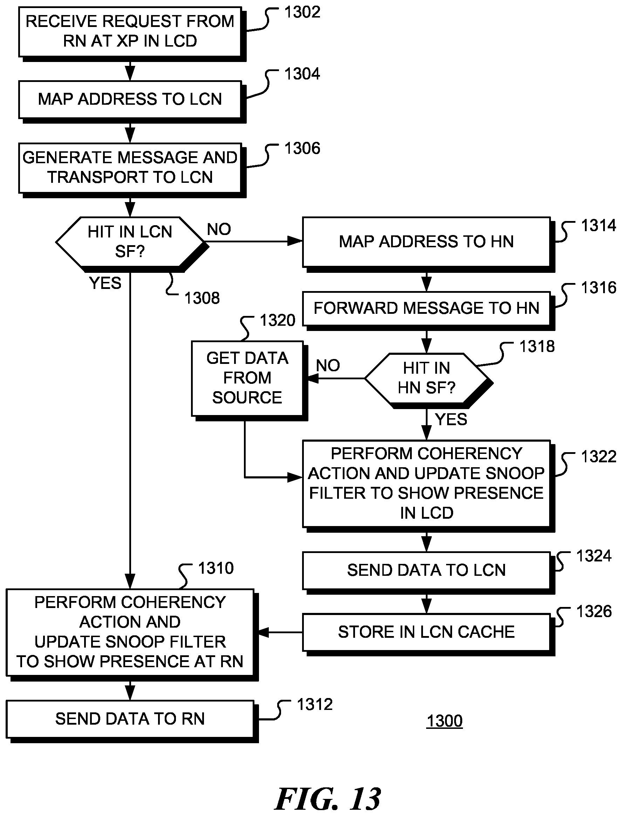

**FIG. 13** is a flow chart of a method 1300 for data transfer in data processing network, in accordance with various representative embodiments. The data processing network is configured to include one or more local cache domains (LCDs) of one or more LCDs of a data processing network. An LCD associates a set of addresses in a memory of the data processing network with one or more local cache nodes (LCNs) in a sub-network of the data processing network and includes a set of one or more request nodes (RNs) in the sub-network of the data processing network. Addresses in the set of addresses are accessible via home nodes (HNs) of the data processing network that are outside of the sub-network, so that in the LCD, data cached at an LCN is closer (in terms of network hops) to the RNs in the LCD. Referring to **FIG. 13****,** an RN in the LCD issues a data transfer request associated with a first address in the set of addresses (such as the start address of a cache line) at block 1302. The address is mapped to a local cache node (LCN) in the LCD at block 1304. A corresponding data transfer request is generated at block 1306 and sent from the first RN to the LCN via the network interconnect. When the data transfer request from the first RN is a read request for data associated with the first address and the data is stored at the LCN (i.e., there is cache hit in the LCN cache), the request is serviced by the LCN, as depicted by the positive branch from decision block 1308. In the example shown, servicing the request includes performing any coherency action and updating the LCN snoop filter to indicate presence of the data at the RN at block 1310 and send the data to the RN at block 1312. When data associated with the first address is not stored at the LCN, as indicated by the negative branch from decision block 1308, the first address is mapped to the HN associated with the first address (which may be outside of the LCD) at block 1314 and the data transfer request is forwarded by the LCN to the HN at block 1316. If there is no hit in the cache of the HN, as depicted by the negative branch from decision block 1318, the data is retrieved from the memory or other source (such as a network cache when there is a hit in the snoop filter of the HN) at block 1320. At block 1322, any necessary coherency actions are performed. When the request allocates at the LCN, the snoop filter of the HN is updated to show the presence of the data at the LCN. At block 1324 the data is sent to the LCN and may be stored in the LCN cache at block 1326. As discussed below, allocation of the data in the HN cache or LCN cache may be controlled by hints of flags in the data transfer request. Once the data is received at the LCN, flow continues to block 1310, and the LCN performs any needed coherency actions.

Subsequent requests by an RN in the LCD for the first address are also sent to the LCN associated with the first address. These requests are serviced by the LCN and do not require retrieving the data via the more distant HN associated with the first address.

If the RN is not in the set of RNs of the LCD, or the address is not in the associated set of addresses, the data request is sent directly to the HN associated with the address.

### Allocation Hints

In order to avoid unnecessary data replacement and data replication across multiple LCDs and/or in the HN, allocation hints may be used. The allocation hints indicate the preferred location/hierarchy to allocate data for a specific request.

In one embodiment, a "shared read" request includes extra bits that indicate where data should be allocated in each hierarchy. For example, for a two-level hierarchy, these bits enable sharable read requests to include hints from the NEs (that are aware of the sharing degree and access patterns) that indicate if the data should be stored in any of the LCDs, any of the HNS, or not at all. The use of allocation hints enables the network to take advantage of the hierarchy only when the sharing pattern can benefit from it. This avoids data replication and data pollution on the other cases.

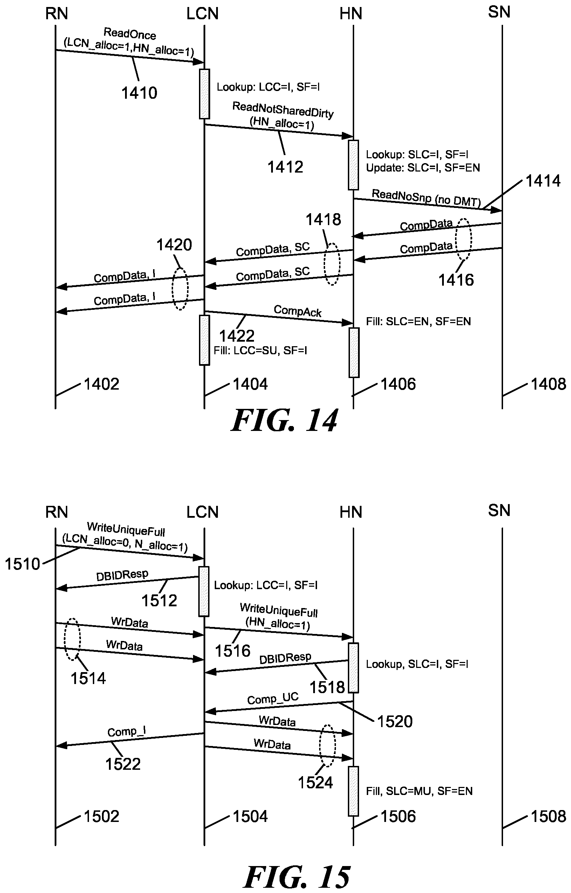

**FIG. 14** is a sequence diagram for an example read operation, in accordance with various representative embodiments. The sequence diagram shows timeline 1402 for a request node (RN), timeline 1404 for a local cache node (LCN) in the local domain of the RN, timeline 1406 for a home node (HN), and timeline 1408 for a subordinate node (SN). In the two-level hierarchy shown, the read operation allocates in both the LCN and the HN caches. Here, "allocate" means to allocate space in the cache and store the data in the cache. The sequence begins with "ReadOnce" request 1410 sent from the RN to the LCN. In this example, allocation bits "LCN_alloc" and "HN_alloc" in the request are set to one to indicate that the read operation should allocate in both the LCN and the HN. In a prior approach, a ReadOnce request would not allocate since the requested data would not be reused by the RN. On receiving the request at the LCN, the address associated with the request is looked up in the local coherent cache (LCC) of the LCN. In this example, the requested data is not in the LCC and the snoop filter indicates that the data is not present in any other cache in the LCD. Accordingly, a request (ReadNotSharedDirty) 1412 is sent to the home node associated with the address with an indication that the requested data should allocate in the home node (HN_alloc=1). In this example, the requested data is not in the portion of the SLC of the HN and the snoop filter indicates that the data is not present in any other cache or local cache domain. Accordingly, request 1414 (ReadNoSnp) is sent to the subordinate node (SN) for the data. The data retrieved by the SN is sent back to the HN in data beats 1416, forwarded to the LCN in data beats 1418 and finally forwarded to the RN in data beats 1420. Since LCN_alloc=1, the LCN fills the LCC with the data and sets the coherency state to Shared Unique (SU). The snoop filter of the LCN need not show the presence of the data at the RN, since the data is in its own cache and cannot be modified by the RN. Following receipt of acknowledgement message (CompAck) 1422, the HN fills the portion of the SLC with the data (since HN_alloc=1) and updates its snoop filter to show presence of the data in the LCD of the LCN.

In one embodiment, write requests include hints to indicate at what level of the hierarchy the dirty data should be allocated. The difference between write operations and read operations is that write operations can only allocate data in one level at a time, while shared reads can allocate at more than one level. Allocation hints for a specific level of hierarchy avoids the need of additional coherency operations and data movements when the write data are subsequently going to be reused by another set of LCDs. If not, the data can be sent to memory.

**FIG. 15** is a sequence diagram for a write operation, in accordance with various representative embodiments. The sequence diagram shows timeline 1502 for a request node (RN), timeline 1504 for a local cache node (LCN) in the local cache domain of the RN, timeline 1506 for a home node (HN) and timeline 1508 for a subordinate node (SN). In the two-level hierarchy shown, the write operation does not allocate in the LCN but only allocates in HN. The sequence begins with the RN sending a write request (WriteUniqueFull) 1510 which is routed to the LCN. Write request 1510 includes an "LCN_alloc" bit that is set to zero in this example to indicate that the write data should not be allocated at the LCN. Write request 1510 also includes an "HN_alloc" bit that is set to one in this example to indicate that the write data should be allocated at the HN.

The LCN checks that no coherency action is required by looking up the write address in its local coherent cache (LCC) and snoop filter (SF), and sends response 1512 (DBIDResp) to indicate that resources are available to handle the write data. The RN sends the data to be written in data beats 1514. The LCN sends write request 1516 to the HN, which in tum sends response 1518 (DBIDResp) ) to indicate that resources are available to handle the write data. After performing any required coherency actions, the HN sends completion message 1520 (Comp_UC) to the LCN to indicate completion of any actions, including that any previously stored data has been cleaned to memory. The LCN sends corresponding message 1522 (Comp_I) to the RN to indicate that the coherency action is complete that any data at the LCN will have coherency state "Invalid." The data is not allocated at the LCN, since the "LCN_alloc" bit was set to zero. The LCN sends the data to the HN in data beats 1524. The data is allocated in the portion of the system level cache (SLC) at the home node and stored in Modified/Unique coherency state (since the write data has not been cleaned to the memory).

In this way, the RN can select, using hints in a request message, whether write data is allocated at the LCN, to be shared with other RNs in the LCD, allocated at the HN for future use by other RNs, or written back to memory.

Other requests, including requests for atomic operations, may include appropriate hints to indicate the level of hierarchy to be utilized. The selection may be based on the expected operation of RNs inside and outside of the LCD. Selecting the appropriate level of hierarchy can minimize the number of coherency operations and the movement of data needed to perform the operation. This avoids overhead on the interconnect and HN when processing the requests.

The embodiments described herein are combinable. Embodiments of the disclosure include:
1. A method of data transfer in a data processing network comprising:
   configuring a local cache domain (LCD) of one or more LCDs of a data processing network, including:
   associating a set of addresses in a memory of the data processing network with one or more local cache nodes (LCNs) in a sub-network of the data processing network,
   where addresses in the set of addresses are accessible via home nodes (HNs) of the data processing network; and
   selecting a set of one or more request nodes (RNs) in the sub-network of the data processing network; and
   for a first RN and a first address, where the first RN is in the set of RNs and the first address is in the set of addresses:
      determining, based on the first address, an LCN of the one or more LCNs associated with the first address; and
      sending a data transfer request associated with the first address from the first RN to the LCN.
2. The method of embodiment 1, further comprising, for the first RN and a second address, where the second address is not in the set of addresses:
   determining, based on the second address, an HN of the data processing network associated with the second address; and
   sending a data transfer request associated with the second address from the first RN to the HN associated with the second address.
3. The method of embodiment 1, where the data transfer request from the first RN is a read request for data associated with the first address, the method further comprising:
   servicing the read request by the LCN when data associated with the first address is stored at the LCN; and
   when data associated with the first address is not stored at the LCN or a cache in sub-network, forwarding, by the LCN, the read request to an HN associated with the first address.
4. The method of embodiment 1, further comprising:
   setting, by the first RN, one or more bits in the data transfer request to indicate whether storage for data associated with the first address should be allocated:
   at the LCN associated with the first address,
   at the HN associated with the first address, or
   at neither the LCN nor the HN associated with the first address.
5. The method of embodiment 1, further comprising:
   analyzing a workload; and
   configuring the one or more LCDs to improve performance of the data processing network when executing the workload.
6. The method of embodiment 1, further comprising:
   analyzing a plurality of workloads;
   for each workload of the plurality of workloads, determining an associated configuration of one or more LCDs to improve performance of the data processing network when executing the workload; and
   prior to executing a first workload of the plurality of workloads, configuring the data processing network for the configuration of one or more LCDs associated with the first workload.
7. The method of embodiment 1, further comprising:
   mapping a workload to a plurality of RNs of the set of RNs; and
   accessing data associated with the set of addresses by plurality of RNs while executing the workload by the plurality of RNs.
8. The method of embodiment 1, further comprising:
   tracking, by the one or more LCNs, coherency for data associated with the set of addresses at the set of RNs of the LCD; and
   tracking, by the HNs outside of the sub-network, coherency for data associated with the set of addresses at the one or more LCDs.
9. The method of embodiment 1, where configuring the LCD comprises configuring the LCD when the data processing network is booted.
10. A method of data transfer during execution of a workload in a data processing network, comprising:
   determining, based on an address in a data transfer request received at a connection point of the data processing network and a system address map, when the address is associated with a local cache domain of the connection point;
   when the address is associated with a local cache domain data of the connection point, routing the data transfer request to a local request node of the local cache domain; and when the address is not associated with a local cache domain of the connection point, routing the data transfer request to a home node of the data processing network associated with the address,
   where said system address map is configured based on an analysis of the workload.
11. A data processing network comprising:
   an interconnect configured to couple between a plurality of request nodes (RNs) of the data processing network, one or more home nodes (HNs) of the data processing network and one or more local cache nodes (LCNs) of the data processing network, the interconnect including one or more system address maps;
   programmable configuration logic configured to set the one or more system address maps to define one or more local cache domains (LCDs), where an LCD of the one or more LCDs:
      associates a set of addresses in a memory with one or more LCNs in a sub-network of the data processing network, where the set of addresses is accessible via HNs of the one or more HNs that are outside of the sub-network; and
      identifies a set of one or more RNs or interconnect cross-points in the sub-network of the data processing network;

   wherein, for a first RN in a set of one or more RNs of an LCD and a first address in the set of addresses of the LCD, the interconnect is configured to:
      determine, based on the first address, an LCN in the LCD associated with the first address; and
      route a data transfer request associated with the first address from the first RN to the LCN via the interconnect; and
   wherein, for the first RN and a second address not in the set of addresses, the interconnect is configured to:
      determine, based on the second address, an HN of the data processing network associated with the second address; and
      route a data transfer request associated with the second address from the first RN to the HN associated with the second address via the interconnect.
12. The data processing network of embodiment 11, further comprising:
   the one or more home nodes (HNs); and
   the one or more local cache nodes (LCNs) of the one or more LCDs.
13. The data processing network of embodiment 12, where an LCN of the one or more LCNs and an HN of the one or more HNs are combined in a super home node (HNS).
14. The data processing network of embodiment 12, where:
   an LCN of the one or more LCNs includes a snoop filter that tracks coherency for the set of one or more RNs of the LCD; and
   an HN of the one or more HNs includes a snoop filter that tracks coherency for one or more LCDs.
15. The data processing network of embodiment 11, where the data processing network spans one or more integrated circuit chips or chiplets.
16. The data processing network of embodiment 11, where the one or more LCDs comprise a hierarchy of LCDs.
17. A non-transitory computer-readable medium storing computer-readable code for fabrication of a data processing network comprising:
   an interconnect configured to couple between a plurality of request nodes (RNs) of the data processing network, one or more home nodes (HNs) of the data processing network and one or more local cache nodes (LCNs) of the data processing network, the interconnect including one or more system address maps;
   programmable configuration logic configured to set the one or more system address maps to define one or more local cache domains (LCDs), where an LCD of the one or more LCDs:
      associates a set of addresses in a memory with one or more LCNs in a sub-network of the data processing network, where the set of addresses is accessible via HNs of the one or more HNs that are outside of the sub-network; and
      identifies a set of one or more RNs or interconnect cross-points in the sub-network of the data processing network;

   wherein, for a first RN in the set of one or more RNs and a first address in the set of addresses, the interconnect is configured to:
      determine, based on the first address, an LCN of the one or more LCNs associated with the first address; and
      route a data transfer request associated with the first address from the first RN to the LCN via the interconnect; and
   wherein, for the RN and a second address, the second address not in the set of addresses, the interconnect is configured to:
      determine, based on the second address, an HN of the data processing network associated with the second address; and
      route a data transfer request associated with the second address from the first RN to the HN associated with the second address via the interconnect.
18. The non-transitory computer-readable medium of embodiment 17, where the data processing network further comprises:
   the one or more home nodes (HNs); and
   the one or more local cache nodes (LCNs) of the one or more LCDs.
19. The non-transitory computer-readable medium of embodiment 18, where an LCN of the one or more LCNs and an HN of the one or more HNs are combined in a super home node (HNS).
20. The non-transitory computer-readable medium of embodiment 17, where:
   the computer-readable code for fabrication of the data processing network includes code for fabricating one or more integrated circuit chips or chiplets; and
   the data processing network spans the one or more integrated circuit chips or chiplets.
21. Programmable configuration logic configured to set the one or more system address maps to define one or more local cache domains (LCDs) in a data processing network that includes an interconnect configured to couple between a plurality of request nodes (RNs) of the data processing network, one or more home nodes (HNs) of the data processing network and one or more local cache nodes (LCNs) of the data processing network, the interconnect including one or more system address maps, where an LCD of the one or more LCDs:
   associates a set of addresses in a memory with one or more local cache nodes (LCNs) in a sub-network of the data processing network, where the set of addresses is accessible via homes nodes (HNs) of the data processing network that are outside of the sub-network; and
   identifies a set of one or more request nodes (RNs) of the data processing network or interconnect cross-points in the sub-network of the data processing network, where the interconnect couples between a plurality of request nodes (RNs) of the data processing network, one or more home nodes (HNs) of the data processing network and one or more local cache nodes (LCNs) of the data processing network, the interconnect including one or more system address maps.

The embodiments described herein are combinable, to include at least:
1. A method of data transfer in a data processing network comprising:
   configuring a local cache domain (LCD) of one or more LCDs of a data processing network, including:
      associating a set of addresses in a memory of the data processing network with one or more local cache nodes (LCNs) in a sub-network of the data processing network, where addresses in the set of addresses are accessible via home nodes (HNs) of the data processing network; and
      selecting a set of one or more request nodes (RNs) in the sub-network of the data processing network; and
   for a first RN and a first address, where the first RN is in the set of RNs and the first address is in the set of addresses:
      determining, based on the first address, an LCN of the one or more LCNs associated with the first address; and
      sending a data transfer request associated with the first address from the first RN to the LCN.
2. The method of embodiment 1, further comprising, for the first RN and a second address, where the second address is not in the set of addresses:
   determining, based on the second address, an HN of the data processing network associated with the second address; and
   sending a data transfer request associated with the second address from the first RN to the HN associated with the second address.
3. The method of any preceding embodiment, where the data transfer request from the first RN is a read request for data associated with the first address, the method further comprising:
   servicing the read request by the LCN when data associated with the first address is stored at the LCN; and
   when data associated with the first address is not stored at the LCN or a cache in sub-network, forwarding, by the LCN, the read request to an HN associated with the first address.
4. The method of any preceding embodiment, further comprising:
   setting, by the first RN, one or more bits in the data transfer request to indicate whether storage for data associated with the first address should be allocated:
   at the LCN associated with the first address,
   at the HN associated with the first address, or
   at neither the LCN nor the HN associated with the first address.
5. The method of embodiment 1, further comprising:
   analyzing a workload; and
   configuring the one or more LCDs to improve performance of the data processing network when executing the workload.
6. The method of any preceding embodiment, further comprising:
   analyzing a plurality of workloads;
   for each workload of the plurality of workloads, determining an associated configuration of one or more LCDs to improve performance of the data processing network when executing the workload; and
   prior to executing a first workload of the plurality of workloads, configuring the data processing network for the configuration of one or more LCDs associated with the first workload.
7. The method of embodiment 1, further comprising:
   mapping a workload to a plurality of RNs of the set of RNs; and
   accessing data associated with the set of addresses by plurality of RNs while executing the workload by the plurality of RNs.
8. The method of any preceding embodiment, further comprising:
   tracking, by the one or more LCNs, coherency for data associated with the set of addresses at the set of RNs of the LCD; and
   tracking, by the HNs outside of the sub-network, coherency for data associated with the set of addresses at the one or more LCDs.
9. The method of embodiment 1, where configuring the LCD comprises configuring the LCD when the data processing network is booted.
10. A data processing network comprising:
   an interconnect configured to couple between a plurality of request nodes (RNs) of the data processing network, one or more home nodes (HNs) of the data processing network and one or more local cache nodes (LCNs) of the data processing network, the interconnect including one or more system address maps;
   programmable configuration logic configured to set the one or more system address maps to define one or more local cache domains (LCDs), where an LCD of the one or more LCDs:
      associates a set of addresses in a memory with one or more LCNs in a sub-network of the data processing network, where the set of addresses is accessible via HNs of the one or more HNs that are outside of the sub-network; and
      identifies a set of one or more RNs or interconnect cross-points in the sub-network of the data processing network;

   wherein, for a first RN in a set of one or more RNs of an LCD and a first address in the set of addresses of the LCD, the interconnect is configured to:
      determine, based on the first address, an LCN in the LCD associated with the first address; and
      route a data transfer request associated with the first address from the first RN to the LCN via the interconnect; and
   wherein, for the first RN and a second address not in the set of addresses, the interconnect is configured to:
      determine, based on the second address, an HN of the data processing network associated with the second address; and
      route a data transfer request associated with the second address from the first RN to the HN associated with the second address via the interconnect.
11. The data processing network of embodiment 10, further comprising:
   the one or more home nodes (HNs); and
   the one or more local cache nodes (LCNs) of the one or more LCDs.
12. The data processing network of embodiment 11, where an LCN of the one or more LCNs and an HN of the one or more HNs are combined in a super home node (HNS), or.
   where:
   an LCN of the one or more LCNs includes a snoop filter that tracks coherency for the set of one or more RNs of the LCD; and
   an HN of the one or more HNs includes a snoop filter that tracks coherency for one or more LCDs.
13. The data processing network as in any of embodiments 10 to 12, where the data processing network spans one or more integrated circuit chips or chiplets.
14. The data processing network as in any of embodiments 10 to 13, where the one or more LCDs comprise a hierarchy of LCDs.
15. Programmable configuration logic configured to set the one or more system address maps to define one or more local cache domains (LCDs) in a data processing network that includes an interconnect configured to couple between a plurality of request nodes (RNs) of the data processing network, one or more home nodes (HNs) of the data processing network and one or more local cache nodes (LCNs) of the data processing network, the interconnect including one or more system address maps, where an LCD of the one or more LCDs:
   associates a set of addresses in a memory with one or more local cache nodes (LCNs) in a sub-network of the data processing network, where the set of addresses is accessible via homes nodes (HNs) of the data processing network that are outside of the sub-network; and
   identifies a set of one or more request nodes (RNs) of the data processing network or interconnect cross-points in the sub-network of the data processing network, where the interconnect couples between a plurality of request nodes (RNs) of the data processing network, one or more home nodes (HNs) of the data processing network and one or more local cache nodes (LCNs) of the data processing network, the interconnect including one or more system address maps.

While this present disclosure is susceptible of embodiment in many different forms, there is shown in the drawings and will herein be described in detail specific embodiments, with the understanding that the embodiments shown and described herein should be considered as providing examples of the principles of the present disclosure and are not intended to limit the present disclosure to the specific embodiments shown and described. In the description below, like reference numerals are used to describe the same, similar or corresponding parts in the several views of the drawings. For simplicity and clarity of illustration, reference numerals may be repeated among the figures to indicate corresponding or analogous elements.

In this document, relational terms such as first and second, top and bottom, and the like may be used solely to distinguish one entity or action from another entity or action without necessarily requiring or implying any actual such relationship or order between such entities or actions. The terms "comprises," "comprising," "includes," "including," "has," "having," or any other variations thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ... a" does not, without more constraints, preclude the existence of additional identical elements in the process, method, article, or apparatus that comprises the element.

Reference throughout this document to "one embodiment," "certain embodiments," "an embodiment," "implementation(s)," "aspect(s)," or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

The term "or," as used herein, is to be interpreted as an inclusive or meaning any one or any combination. Therefore, "A, B or C" means "any of the following: A; B; C; A and B; A and C; B and C; A, B and C." An exception to this definition will occur only when a combination of elements, functions, steps or acts are in some way inherently mutually exclusive.

As used herein, the term "configured to," when applied to an element, means that the element may be designed or constructed to perform a designated function, or that is has the required structure to enable it to be reconfigured or adapted to perform that function.

Numerous details have been set forth to provide an understanding of the embodiments described herein. The embodiments may be practiced without these details. In other instances, well-known methods, procedures, and components have not been described in detail to avoid obscuring the embodiments described. The disclosure is not to be considered as limited to the scope of the embodiments described herein.

Those skilled in the art will recognize that the present disclosure has been described by means of examples. The present disclosure could be implemented using hardware component equivalents such as special purpose hardware and/or dedicated processors which are equivalents to the present disclosure as described and claimed. Similarly, dedicated processors and/or dedicated hard wired logic may be used to construct alternative equivalent embodiments of the present disclosure.

Dedicated or reconfigurable hardware components used to implement the disclosed mechanisms may be described, for example, by instructions of a hardware description language (HDL), such as VHDL, Verilog or RTL (Register Transfer Language), or by a netlist of components and connectivity. The instructions may be at a functional level or a logical level or a combination thereof. The instructions or netlist may be input to an automated design or fabrication process (sometimes referred to as high-level synthesis) that interprets the instructions and creates digital hardware that implements the described functionality or logic.

The HDL instructions or the netlist may be stored on non-transitory computer readable medium such as Electrically Erasable Programmable Read Only Memory (EEPROM); non-volatile memory (NVM); mass storage such as a hard disc drive, floppy disc drive, optical disc drive; optical storage elements, magnetic storage elements, magnetooptical storage elements, flash memory, core memory and/or other equivalent storage technologies without departing from the present disclosure. Such alternative storage devices should be considered equivalents.

Concepts described herein may be embodied in computer-readable code for fabrication of an apparatus that embodies the described concepts. For example, the computer-readable code can be used at one or more stages of a semiconductor design and fabrication process, including an electronic design automation (EDA) stage, to fabricate an integrated circuit comprising the apparatus embodying the concepts. The above computer-readable code may additionally or alternatively enable the definition, modelling, simulation, verification and/or testing of an apparatus embodying the concepts described herein.

For example, the computer-readable code for fabrication of an apparatus embodying the concepts described herein can be embodied in code defining a hardware description language (HDL) representation of the concepts. For example, the code may define a register-transfer-level (RTL) abstraction of one or more logic circuits for defining an apparatus embodying the concepts. The code may define an HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code may provide definitions embodying the concept using system-level modelling languages such as SystemC and SystemVerilog or other behavioral representations of the concepts that can be interpreted by a computer to enable simulation, functional and/or formal verification, and testing of the concepts.

Additionally, or alternatively, the computer-readable code may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in fabrication of an apparatus embodying the invention. Alternatively, or additionally, the one or more logic synthesis processes can generate from the computer-readable code a bitstream to be loaded into a field programmable gate array (FPGA) to configure the FPGA to embody the described concepts. The FPGA may be deployed for the purposes of verification and test of the concepts prior to fabrication in an integrated circuit or the FPGA may be deployed in a product directly.

The computer-readable code may comprise a mix of code representations for fabrication of an apparatus, for example including a mix of one or more of an RTL representation, a netlist representation, or another computer-readable definition to be used in a semiconductor design and fabrication process to fabricate an apparatus embodying the invention. Alternatively, or additionally, the concept may be defined in a combination of a computer-readable definition to be used in a semiconductor design and fabrication process to fabricate an apparatus and computer-readable code defining instructions which are to be executed by the defined apparatus once fabricated.

Such computer-readable code can be disposed in any known transitory computer-readable medium (such as wired or wireless transmission of code over a network) or non-transitory computer-readable medium such as semiconductor, magnetic disk, or optical disc. An integrated circuit fabricated using the computer-readable code may comprise components such as one or more of a central processing unit, graphics processing unit, neural processing unit, digital signal processor or other components that individually or collectively embody the concept.

Various embodiments described herein are implemented using dedicated hardware, configurable hardware or programmed processors executing programming instructions that are broadly described in flow chart form that can be stored on any suitable electronic storage medium or transmitted over any suitable electronic communication medium. A combination of these elements may be used. Those skilled in the art will appreciate that the processes and mechanisms described above can be implemented in any number of variations without departing from the present disclosure. For example, the order of certain operations carried out can often be varied, additional operations can be added, or operations can be deleted, without departing from the present disclosure. Such variations are contemplated and considered equivalent.

The various representative embodiments, which have been described in detail herein, have been presented by way of example and not by way of limitation. It will be understood by those skilled in the art that various changes may be made in the form and details of the described embodiments resulting in equivalent embodiments that remain within the scope of the appended claims.

## Claims

1. A method of data transfer in a data processing network comprising:
configuring a local cache domain (LCD) of one or more LCDs of a data processing network, including:
associating a set of addresses in a memory of the data processing network with one or more local cache nodes (LCNs) in a sub-network of the data processing network, where addresses in the set of addresses are accessible via home nodes (HNs) of the data processing network; and
selecting a set of one or more request nodes (RNs) in the sub-network of the data processing network; and
for a first RN and a first address, where the first RN is in the set of RNs and the first address is in the set of addresses:
determining, based on the first address, an LCN of the one or more LCNs associated with the first address; and
sending a data transfer request associated with the first address from the first RN to the LCN.

2. The method of claim 1, further comprising, for the first RN and a second address, where the second address is not in the set of addresses:
determining, based on the second address, an HN of the data processing network associated with the second address; and
sending a data transfer request associated with the second address from the first RN to the HN associated with the second address.

3. The method of any preceding claim, where the data transfer request from the first RN is a read request for data associated with the first address, the method further comprising:
servicing the read request by the LCN when data associated with the first address is stored at the LCN; and
when data associated with the first address is not stored at the LCN or a cache in sub-network, forwarding, by the LCN, the read request to an HN associated with the first address.

4. The method of any preceding claim, further comprising:
setting, by the first RN, one or more bits in the data transfer request to indicate whether storage for data associated with the first address should be allocated:
at the LCN associated with the first address,
at the HN associated with the first address, or
at neither the LCN nor the HN associated with the first address.

5. The method of any preceding claim, further comprising:
analyzing a workload; and
configuring the one or more LCDs to improve performance of the data processing network when executing the workload.

6. The method of any preceding claim, further comprising:
analyzing a plurality of workloads;
for each workload of the plurality of workloads, determining an associated configuration of one or more LCDs to improve performance of the data processing network when executing the workload; and
prior to executing a first workload of the plurality of workloads, configuring the data processing network for the configuration of one or more LCDs associated with the first workload.

7. The method of any preceding claim, further comprising:
mapping a workload to a plurality of RNs of the set of RNs; and
accessing data associated with the set of addresses by plurality of RNs while executing the workload by the plurality of RNs.

8. The method of any preceding claim, further comprising:
tracking, by the one or more LCNs, coherency for data associated with the set of addresses at the set of RNs of the LCD; and
tracking, by the HNs outside of the sub-network, coherency for data associated with the set of addresses at the one or more LCDs.

9. The method of any preceding claim, where configuring the LCD comprises configuring the LCD when the data processing network is booted.

10. A data processing network comprising:
an interconnect configured to couple between a plurality of request nodes (RNs) of the data processing network, one or more home nodes (HNs) of the data processing network and one or more local cache nodes (LCNs) of the data processing network, the interconnect including one or more system address maps;
programmable configuration logic configured to set the one or more system address maps to define one or more local cache domains (LCDs), where an LCD of the one or more LCDs:
associates a set of addresses in a memory with one or more LCNs in a sub-network of the data processing network, where the set of addresses is accessible via HNs of the one or more HNs that are outside of the sub-network; and
identifies a set of one or more RNs or interconnect cross-points in the sub-network of the data processing network;
wherein, for a first RN in a set of one or more RNs of an LCD and a first address in the set of addresses of the LCD, the interconnect is configured to:
determine, based on the first address, an LCN in the LCD associated with the first address; and
route a data transfer request associated with the first address from the first RN to the LCN via the interconnect; and
wherein, for the first RN and a second address not in the set of addresses, the interconnect is configured to:
determine, based on the second address, an HN of the data processing network associated with the second address; and
route a data transfer request associated with the second address from the first RN to the HN associated with the second address via the interconnect.

11. The data processing network of claim 10, further comprising:
the one or more home nodes (HNs); and
the one or more local cache nodes (LCNs) of the one or more LCDs.

12. The data processing network of claim 11, where an LCN of the one or more LCNs and an HN of the one or more HNs are combined in a super home node (HNS), or
where
an LCN of the one or more LCNs includes a snoop filter that tracks coherency for the set of one or more RNs of the LCD; and
an HN of the one or more HNs includes a snoop filter that tracks coherency for one or more LCDs.

13. The data processing network as in any of claims 10 to 12, where the data processing network spans one or more integrated circuit chips or chiplets.

14. The data processing network as in any of claims 10 to 13, where the one or more LCDs comprise a hierarchy of LCDs.

15. Programmable configuration logic configured to set the one or more system address maps to define one or more local cache domains (LCDs) in a data processing network that includes an interconnect configured to couple between a plurality of request nodes (RNs) of the data processing network, one or more home nodes (HNs) of the data processing network and one or more local cache nodes (LCNs) of the data processing network, the interconnect including one or more system address maps, where an LCD of the one or more LCDs:
associates a set of addresses in a memory with one or more local cache nodes (LCNs) in a sub-network of the data processing network, where the set of addresses is accessible via homes nodes (HNs) of the data processing network that are outside of the sub-network; and
identifies a set of one or more request nodes (RNs) of the data processing network or interconnect cross-points in the sub-network of the data processing network, where the interconnect couples between a plurality of request nodes (RNs) of the data processing network, one or more home nodes (HNs) of the data processing network and one or more local cache nodes (LCNs) of the data processing network, the interconnect including one or more system address maps.
